# EUROPEAN PATENT SPECIFICATION

(11) **EP 1 731 339 B1**
(45) Date of publication and mention of the grant of the patent: **02.01.2008**
(21) Application number: 06113929.1
(22) Date of filing: 15.05.2006
(51) Int. Cl.: B60H 1/00, F24F 13/20

(54) **Double fan ventilation assembly for vehicles**
Doppelgebläseanordnung für Kraftfahrzeuge
Système de ventilation à double ventilateur pour véhicules

(30) Priority: 10.06.2005 IT TO20050405
(43) Date of publication of application: 13.12.2006
(73) Proprietor: DENSO THERMAL SYSTEMS S.p.A., 10046 Poirino (Torino) (IT)
(72) Inventor: Ferrarese, Claudio, 10046 Poirino (IT)
(74) Representative: Marchitelli, Mauro

(56) References cited:
- EP-A- 1 484 509
- DE-U1- 8 914 525
- US-A- 2 710 573
- US-A1- 2004 115 039

## Description

The present invention relates to a double fan ventilation assembly for vehicles. More specifically, the invention relates to a ventilation assembly for vehicles with a centrifugal ventilator including an electric motor that actuates in rotation two mutually coaxial centrifugal fans positioned at opposite sides relative to the motor.

With respect to ventilation assemblies with a single fan, a double fan ventilation assembly has higher efficiency, can operate at a lower rotational velocity and consequently is quieter.

In ventilation assemblies for vehicles, it is necessary to assure the possibility of removing the fan to perform extraordinary maintenance operations. For example, in case of failure, it must be possible to replace the motor and fan set.

In double fan ventilation assemblies, each fan is housed in a respective chamber with an intake opening and a delivery opening and this makes it difficult to extract the fan. Document US 2710573, which is considered as the closest prior art, discloses such an assembly.

The object of the present invention is to provide a ventilation assembly for vehicles with double fan, in which it is possible to remove the assembly comprising the electric motor and the two fans in simple, rapid fashion.

According to the present invention, said object is achieved by a ventilation assembly for vehicles having the characteristics set out in the claims.

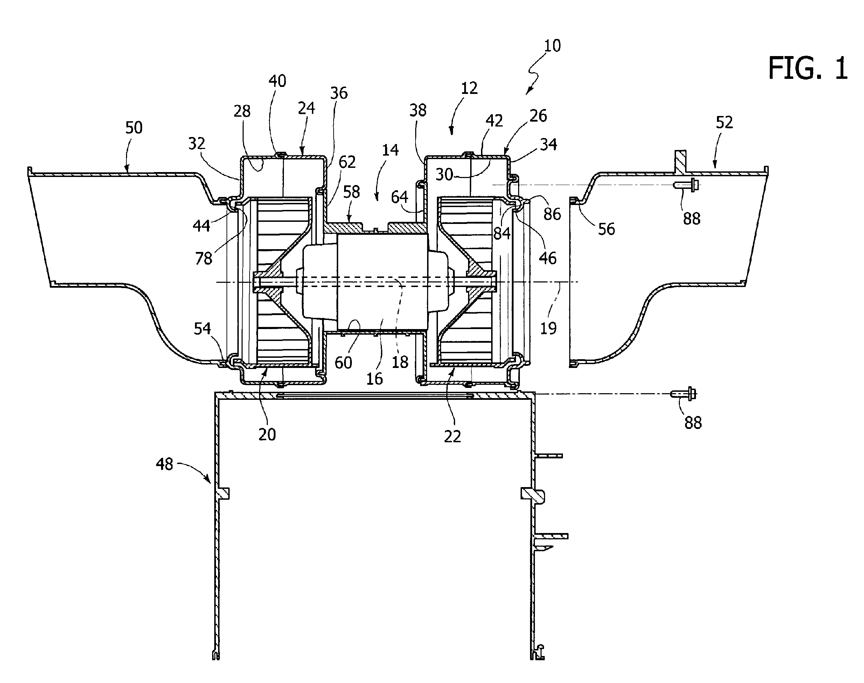

The present invention shall now be described in detail with reference to the accompanying drawings, provided purely by way of non limiting example, in which Figures 1 through 4 are schematic front sections illustrating the sequence of disassembly of the centrifugal fan in a ventilation assembly according to the present invention.

With reference to the figures, the number 10 designates a ventilation assembly for vehicles intended to be incorporated in a heating and/or air conditioning assembly for vehicles. The ventilation assembly 10 is to be mounted inside the vehicle dashboard. Usually, the ventilation assembly is positioned in a central area of the vehicle, between the steering column and the glove compartment located in front of the forward passenger seat. The ventilation assembly 10 comprises a case 12 made of plastic material wherein is housed a centrifugal ventilator 14.

The centrifugal ventilator 14 comprises an electric motor 16 having a shaft 18 able to rotate around an axis 19. The two ends of the shaft 18 project from opposite parts of the motor 16. On a first end of the shaft 18 is keyed a first centrifugal fan 20. A second centrifugal fan, identical to the first, is keyed on the opposite end of the shaft 18.

The case 12 of the ventilation assembly 10 comprises two air conveying sections 24, 26, each of which defines a chamber 28, 30 within which is housed a respective centrifugal fan 20, 22. Each of the two sections 24, 26 constitutes the stator of a centrifugal ventilator.

Each section 24, 26 has an outer front wall 32, 34, an inner front wall 36, 38 and a circumferential wall 40, 42. The two inner front walls 36, 38 are distanced from each other along the axis 19.

Each conveying section 24 has an opening 44, 46 in the outer front wall 32, 34 for the entry of the air flow. Each conveying section 24, 26 also has an opening for the exit of the air flow (not shown) formed in the circumferential wall 40, 42. The outlets of the two conveying sections 24, 26 lead to a treatment box 48 wherein the air flow is heated or cooled passing through a heater or an evaporator.

The ventilation assembly 10 comprises two air intake boxes 50, 52 connected to the respective conveying sections 24, 26. Each air intake box 50, 52 comprises an inlet for the entry of the air coming from the exterior, an inlet for the entry of the air coming from the interior of the passenger compartment (recirculation) and a valve element (not shown) which enables selectively to close one or the other of the inlets. Each air intake box 50, 52 also has an outlet 54, 56 which communicates with the inlet 44, 46 of the respective conveying section 24, 26. Each fan 20, 22 has a front inlet for the entry of the air flow facing the corresponding inlet 44, 46 of the respective conveying section 24, 26. Each centrifugal fan 20, 22 has a plurality of fins positioned along a cylindrical surface, which, by effect of the rotation of the fan, generate a radial air flow which is collected and conveyed by the walls of the respective conveying sections 24, 26.

The centrifugal ventilator 14 comprises a support 58 preferably made of injection-moulded plastic material, having a cylindrical seat 60 within which is inserted and fastened the electric motor 16. The support 58 has two radial closure walls 62, 64. Each radial closure wall 62, 64 has a respective annular rib 66, 68 projecting in the axial direction. Preferably, the annular ribs 66, 68 are situated at the end of the respective radial closure wall 62, 64. The annular rib 68 is positioned at a greater distance from the axis 19 than the distance from the axis of the annular rib 66.

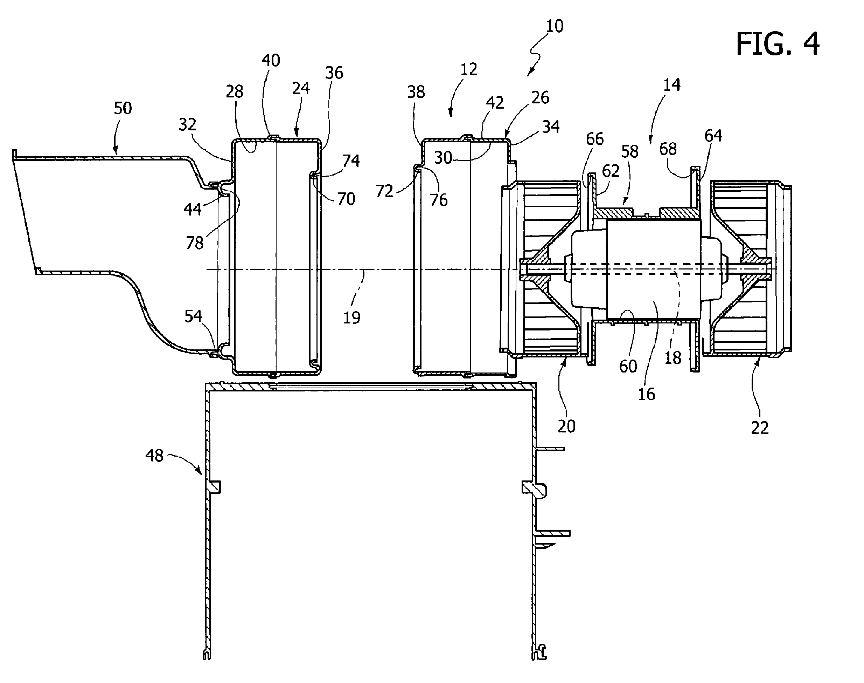

As shown in greater detail in Figure 4, the inner front walls 36, 38 of the conveying sections 24, 26 are provided with respective openings 70, 72. The inner front walls 36, 38 have, at the openings 70, 72, respective annular grooves 74, 76. The annular groove 74 has its own concavity oriented towards the exterior of the conveying section 24 whilst the annular groove 76 has its own concavity oriented towards the exterior in the conveying section 26. The distance of the groove 74 relative to the axis 19 is equal to the distance of the groove 66 relative to the same axis 19. Similarly, the distance of the annular groove 76 relative to the axis 19 is equal to the distance of the rib 68 from the axis 19. The diameter of the opening 70 is greater than the outer diameter of the centrifugal fan 20 and the diameter of the opening 72 is greater than the outer diameter of the closing wall 62.

The outer front wall 32 of the conveying section 24 has, at the opening 44, an annular groove 78 with concavity oriented towards the interior of the conveying section 24. The outer front edge of the centrifugal fan 20 extends to the interior of the annular groove 78.

The outer front wall 34 of the conveying section 26 has an opening 80 with a greater diameter than the outer diameter of the closing wall 74. A removable annular element 82 is fastened to the outer front wall 34. The annular element 82 has an annular groove 84 with concavity oriented towards the interior of the conveying section 26. The front edge of the fan 22 is inserted in the annular groove 84. The annular element 82 has an outer rib 86 whereto is connected the air intake box 52. In a variant of the present invention, the annular element could be incorporated in the air intake box 52. In this case, the front end of the air intake box 52 would have the groove 84 and would be fastened directly on the outer front wall 34 of the conveying section 26.

With reference to Figure 1, under normal operating conditions the two fans 20, 22 are housed within the respective conveying sections 24, 26. The air intake boxes 50, 52 are connected and fastened to the respective conveying sections 24, 26. The closing walls 62, 64 of the support 58 close the openings 70, 72 of the inner front walls 36, 38.

To remove the centrifugal ventilator 14, the sequence illustrated in Figures 1 through 4 is followed. In a first step, as shown in Figure 1, the air intake box 52 is separated from the conveying section 26. The air intake box 52 can be connected to the conveying section 26 in snap-in fashion or by means of screws schematically designated by the number 88 in Figure 1. Figure 1 shows the condition in which, after the removal of the screws 88, the air intake box 54 is moved away from the conveying section 26.

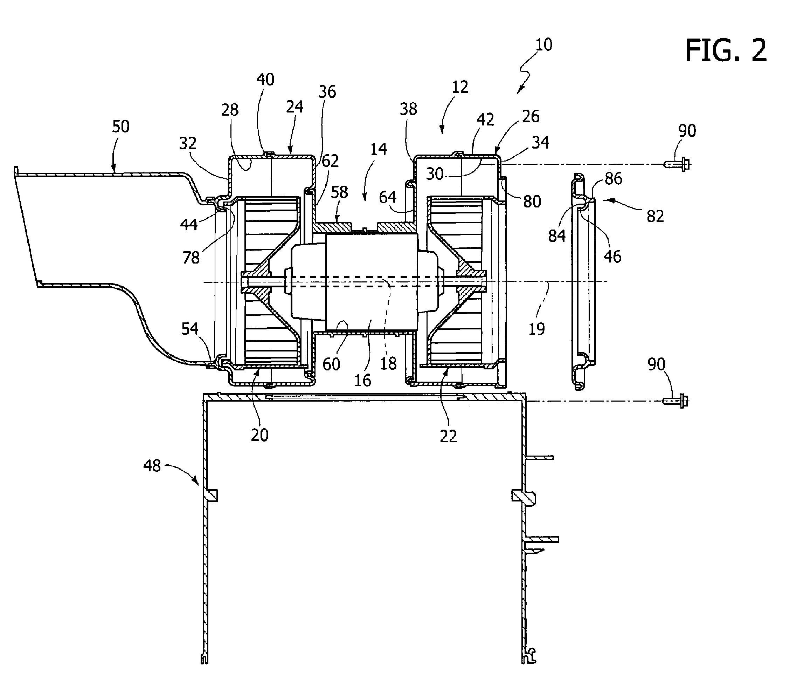

In the subsequent step, shown in Figure 2, the annular element 82 is removed. Naturally, this operation is not necessary if the annular element 82 is incorporated in the air intake box 52. The annular element 82, if it is an autonomous component, can be fastened in snap-in fashion or by means of screws to the front wall 34 of the conveying section 26. In Figure 2, the reference number 90 schematically designates the screws that fasten the annular element 82 to the conveying section 26.

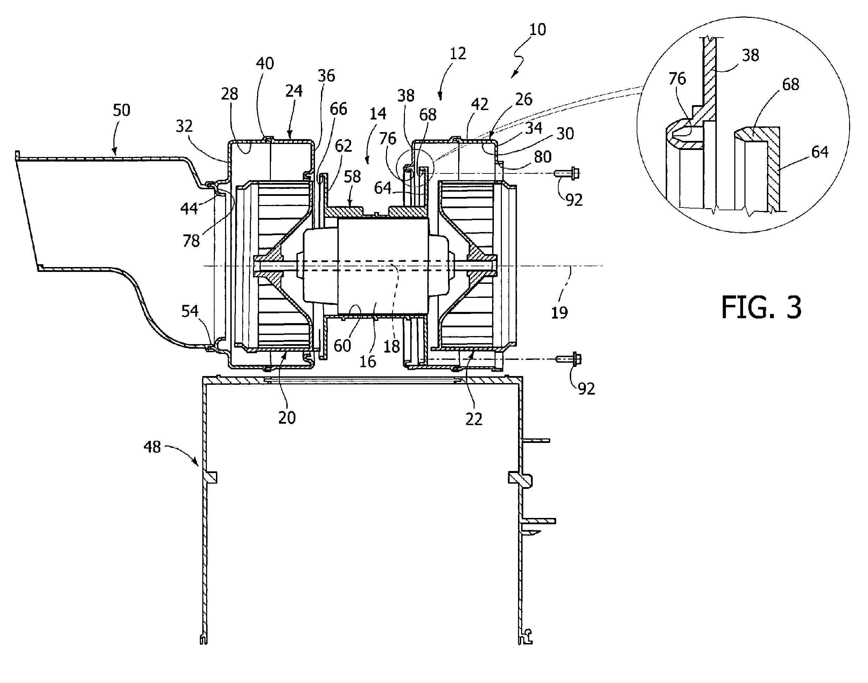

After the removal of the annular element 82, as shown in Figure 2, the centrifugal ventilator 14 is disassembled. The ventilator 14 can be fastened to the conveying section 26 by means of screws designated with the number 92 in Figure 3. After the removal of said screws (which can be accessed through the opening 80) the ventilator 14 can be extracted in the direction of its own axis 19.

Figure 4 shows the ventilation assembly after the extraction of the centrifugal ventilator 14. It is readily apparent that in the solution according to the present invention the set comprising: motor support 58, electric motor 16 and centrifugal fans 20, 22 is extracted.

The disassembly in the axial direction of the centrifugal ventilator described above enables to replace the centrifugal ventilator acting through the opening in which the glove compartment is mounted.

The solution according to the present invention enables to assemble and disassemble the ventilator assembly in relatively simple and rapid fashion, minimising the number of components which need to be disassembled to access the ventilator.

The present invention may be the subject of numerous variants without thereby departing from the scope of the invention as defined by the claims that follow. For example, the ventilator may be removed from the right side of the assembly, as shown in the figures, or from the left side. Disassembling the ventilator from the left side is advantageous in particular in vehicles with right-hand drive.

## Claims

1. A ventilation assembly (10) for vehicles, comprising:
- a centrifugal ventilator (14) including an electric motor (16) that actuates in rotation two mutually coaxial centrifugal fans (20, 22) positioned at opposite sides relative to the motor (16), said centrifugal ventilator (14) comprising a support (58) fastened to said motor (16), and
- a case (12) having two conveying sections (24, 26) within which are housed the respective fans (20, 22), wherein said conveying sections (24, 26) are provided with respective internal front walls (36, 38), **characterized in that** said internal front walls have respective openings (70, 72) through which the centrifugal ventilator (14) including said electric motor (16) and said fans (20, 22) can be extracted and inserted and **in that** said support (58) fastened to the motor (16) has first and second closing walls (62, 64) which close the openings (70, 72) of the first and of the second conveying section (24, 26).

2. Ventilation assembly as claimed in claim 1, **characterised in that** it comprises two air intake boxes (50, 52) fastened to the respective conveying sections (24, 26), at least one of said air intake boxes (50, 52) being removably connected to the respective conveying section (26) to free an opening (80) through which said ventilator assembly (14) can be extracted and inserted.

3. Ventilation assembly as claimed in claim 1, **characterised in that** the inner front wall (36) of a first conveying section (24) has an opening (70) with a greater diameter than the outer diameter in the respective centrifugal fan (20) and **in that** the inner front wall (38) of a second conveying section (26) has an opening (72) with a greater diameter than the outer diameter of the closing wall (62) associated to the inner front wall (36) of the first conveying section (34).

4. Ventilation assembly as claimed in claim 2, **characterised in that** it comprises an annular element (82) removably connected to the second conveying section (26).

5. Ventilation assembly as claimed in claim 4, **characterised in that** said annular element (82) is integrally formed with the respective air intake box (52).

## Patentansprüche

1. Belüftungsanordnung (10) für Fahrzeuge, die umfasst:
einen Zentrifugalventilator (14), der einen Elektromotor (16) enthält, der in Drehung zwei zueinander koaxiale Zentrifugallüfter (20, 22) betätigt, die relativ zu dem Motor (16) an einander gegenüberliegenden Seiten angeordnet sind, wobei der Zentrifugalventilator (14) einen Träger (58), der an dem Motor (16) befestigt ist, und ein Gehäuse (12) umfasst, das zwei Transportabschnitte (24, 26) aufweist, in denen die jeweiligen Lüfter (20, 22) aufgenommen sind, und die Transportabschnitte (24, 26) mit jeweiligen inneren Vorderwänden (36, 38) versehen sind, **dadurch gekennzeichnet, dass** die inneren Vorderwände jeweilige Öffnungen (70, 72) haben, über die der Zentrifugalventilator (14) einschließlich des Elektromotors (16) und der Lüfter (20, 22) entnommen und eingesetzt werden kann, und dass der Träger (58), der an dem Motor (16) befestigt ist, eine erste und eine zweite Verschlusswand (62, 64) hat, die die Öffnungen (70, 72) des ersten und des zweiten Transportabschnitts (24, 26) verschließen.

2. Belüftungsanordnung nach Anspruch 1, **dadurch gekennzeichnet, dass** sie zwei Luftansaugkästen (50, 52) umfasst, die an den jeweiligen Transportabschnitten (24, 26) befestigt sind, wobei wenigstens einer der Luftansaugkästen (50, 52) abnehmbar mit dem jeweiligen Transportabschnitt (26) verbunden ist, um eine Öffnung (80) freizugeben, über die die Ventilatoranordnung (14) entnommen und eingesetzt werden kann.

3. Belüftungsanordnung nach Anspruch 1, **dadurch gekennzeichnet, dass** die innere Vorderwand (36) eines ersten Transportabschnitts (24) eine Öffnung (70) mit einem größeren Durchmesser als dem Außendurchmesser in dem jeweiligen Zentrifugallüfter (20) hat, und dass die innere Vorderwand (38) eines zweiten Transportabschnitts (26) eine Öffnung (72) mit einem größeren Durchmesser als dem Außendurchmesser der Verschlusswand (62) hat, die zu der inneren Vorderwand (36) des ersten Transportabschnitts (34) gehört.

4. Belüftungsanordnung nach Anspruch 2, **dadurch gekennzeichnet, dass** sie ein ringförmiges Element (82) umfasst, das abnehmbar mit dem zweiten Transportabschnitt (26) verbunden ist.

5. Belüftungsanordnung nach Anspruch 4, **dadurch gekennzeichnet, dass** das ringförmige Element (82) integral mit dem jeweiligen Luftansaugkasten (52) ausgebildet ist.

## Revendications

1. Ensemble de ventilation (10) pour véhicules, comprenant :
- un ventilateur centrifuge (14) comportant un moteur électrique (16) qui actionne en rotation deux soufflantes centrifuges (20, 22) mutuellement coaxiales positionnées au niveau des côtés opposées par rapport au moteur (16), ledit ventilateur centrifuge (14) comprenant un support (58) fixé audit moteur (16), et
- un boîtier (12) présentant deux sections de transport (24, 26) à l'intérieur desquelles sont logées les soufflantes (20, 22) respectives, dans lequel
lesdites sections de transport (24, 26) sont pourvues de parois avant internes (36, 38) respectives, **caractérisé en ce que** lesdites parois avant internes présentent des ouvertures (70, 72) respectives à travers lesquelles le ventilateur centrifuge (14) comportant ledit moteur électrique (16) et lesdites soufflantes (20, 22) peut être extrait et inséré et **en ce que** ledit support (58) fixé au moteur (16) présente des première et seconde parois de fermeture (62, 64) qui ferment les ouvertures (70, 72) de la première et de la seconde sections de transport (24, 26).

2. Ensemble de ventilation selon la revendication 1, **caractérisé en ce qu'**il comprend deux boîtes d'admission d'air (50, 52) fixées aux sections de transport (24, 26) respectives, au moins une desdites boîtes d'admission d'air (50, 52) étant raccordée de manière amovible à la section de transport (26) respective pour libérer une ouverture (80) à travers laquelle ledit ensemble formant ventilateur (14) peut être extrait et inséré.

3. Ensemble de ventilation selon la revendication 1, **caractérisé en ce que** la paroi avant interne (36) d'une première section de transport (24) présente une ouverture (70) dotée d'un diamètre supérieur au diamètre externe dans la soufflante centrifuge (20) respective et **en ce que** la paroi avant interne (38) d'une seconde section de transport (26) présente une ouverture (72) dotée d'un diamètre supérieur au diamètre externe de la paroi de fermeture (62) associée à la paroi avant interne (36) de la première section de transport (34).

4. Ensemble de ventilation selon la revendication 2, **caractérisé en ce qu'**il comprend un élément annulaire (82) raccordé de manière amovible à la seconde section de transport (26).

5. Ensemble de ventilation selon la revendication 4, **caractérisé en ce que** ledit élément annulaire (82) est formé d'un seul tenant avec la boîte d'admission d'air (52) respective.
